# EUROPEAN PATENT APPLICATION

(11) **EP 2 085 748 A2**
(43) Date of publication of application: **05.08.2009**
(21) Application number: 09151159.2
(22) Date of filing: 22.01.2009
(51) Int. Cl.: G01C 23/00

(54) **System and method for generating an altimeter mis-set alert on a primary flight display**

(30) Priority: 30.01.2008 US 22659
(71) Applicant: Honeywell International Inc., Morristown, NJ 07962 (US)
(72) Inventor: Khatwa, Ratan, Morristown, NJ 07962-2245 (US)
(74) Representative: Buckley, Guy Julian

(57) **Abstract**

A primary flight display system (10) is provided for deployment on an aircraft including a barometric altimeter (14) and a secondary altitude-determining device (22). The barometric altimeter provides a first estimated altitude corresponding to a reference pressure setting, and the secondary altitude-determining device provides a second estimated altitude. The primary flight display system includes a primary flight display (PFD) (18), and a controller (12) coupled to the PFD. The controller is configured to generate: (i) an altitude graphic (30) on the PFD indicative of the first estimated altitude, and (ii) a visual alert (36) on the PFD when the difference between the first estimated altitude and the second estimated altitude exceeds a predetermined error threshold.

## Description

### TECHNICAL FIELD

The present invention relates generally to an aircraft display system and, more particularly, to a system and method for generating a visual alert on a primary flight display when an altimeter mis-set is detected.

### BACKGROUND

Barometric altimeters have traditionally been included amongst the standard flight instruments deployed on aircraft. A barometric altimeter estimates an aircraft's flight altitude as a function of external air pressure and a reference pressure. A pilot or other crew member is able to set the value of the reference pressure utilizing a rotatable knob or other such input device. When the aircraft is located beneath the transition altitude (e.g., 18,000 feet above sea level within the United States), the pilot enters a reference pressure setting corresponding to the aircraft's true height above mean sea level. This pressure setting may be provided by an Air Traffic Control Center, a Terminal Radar Approach Control Facility, a Flight Service Station, a control tower, or other such ground-based navigational facility as a QNH or QFE code. When the aircraft ascends above the transition altitude, the pilot adjusts the reference pressure setting to the globally-fixed pressure datum of 1013.25 mbar or 29.921 inches Hg. This practice ensures that flight systems deployed on aircraft flying above the transition altitude are calibrated to a universal reference pressure setting.

Current aircraft display systems comprise multiple cockpit displays, including a primary flight display (PFD). A graphical display is generated on the PFD that visually expresses the status of various flight parameters, including airspeed, heading, attitude, vertical speed, roll, altitude, and the like. The PFD thus serves to increase a pilot's situational awareness by visually expressing a relatively large amount of information on a single composite display. One of the various graphical elements produced on the PFD is an altimeter graphic, which visually expresses the aircraft's altitude as estimated by the barometric altimeter. The altimeter graphic may assume the form of, for example, a metered altitude tape graphic that appears to scroll vertically upward or downward as the aircraft's altitude decreases or increases, respectively. The visual display generated on the PFD may also include a graphic (e.g., textual readout) indicating the current value of the reference pressure setting.

The accuracy of the barometric altimeter may be impacted if an incorrect reference pressure setting is entered (e.g., due to a miscommunication of the QNH or QFE code). It is thus desirable to provide an aircraft display system that is capable of detecting and alerting a pilot to a potential altimeter mis-set. In particular, it would be desirable for such a display system to produce a visual alert on the aircraft's PFD, preferably proximate the altimeter graphics, so as to provide the pilot with an effective and intuitive notification of the altimeter mis-set. Other desirable features and characteristics of the present invention will become apparent from the subsequent detailed description of the invention and the appended claims, taken in conjunction with the accompanying drawings and this background of the invention.

### BRIEF SUMMARY

A primary flight display system is provided for deployment on an aircraft including a barometric altimeter and a secondary altitude-determining device. The barometric altimeter provides a first estimated altitude corresponding to a reference pressure setting, and the secondary altitude-determining device provides a second estimated altitude. The primary flight display system includes a primary flight display (PFD), and a controller coupled to the PFD. The controller is configured to generate: (i) an altitude graphic on the PFD indicative of the first estimated altitude, and (ii) a visual alert on the PFD when the difference between the first estimated altitude and the second estimated altitude exceeds a predetermined error threshold.

A method is also provided for alerting a pilot of an aircraft to the mis-setting of a reference pressure setting associated with a barometric altimeter deployed on the aircraft, which includes a secondary altitude-determining device and a primary flight display (PFD). The method includes the steps of providing a first estimated altitude utilizing the barometric altimeter device, providing a second estimated altitude utilizing the secondary altitude-determining device, and comparing the first estimated altitude to the second estimated altitude. A visual alert is generated on the PFD when the difference between first estimated altitude and the second estimated altitude exceeds a predetermined error threshold.

### BRIEF DESCRIPTION OF THE DRAWINGS

At least one example of the present invention will hereinafter be described in conjunction with the following figures, wherein like numerals denote like elements, and:

FIG. 1 is a block diagram of a primary flight display (PFD) system including a PFD and a secondary flight deck display on which a visual altimeter mis-set alert may be generated in accordance with a first exemplary embodiment;

FIG. 2 is a plan view of a first exemplary altimeter graphic, reference pressure setting graphic, and visual altimeter mis-set alert that may be generated on PFD shown in FIG. 1; and

FIG. 3 is a plan view of a second exemplary altimeter graphic, reference pressure setting graphic, and visual altimeter mis-set alert that may be generated on the secondary flight deck display shown in FIG. 1.

### DETAILED DESCRIPTION

The following Detailed Description is merely exemplary in nature and is not intended to limit the invention or the application and uses of the invention. Furthermore, there is no intention to be bound by any theory presented in the preceding Background or the following Detailed Description.

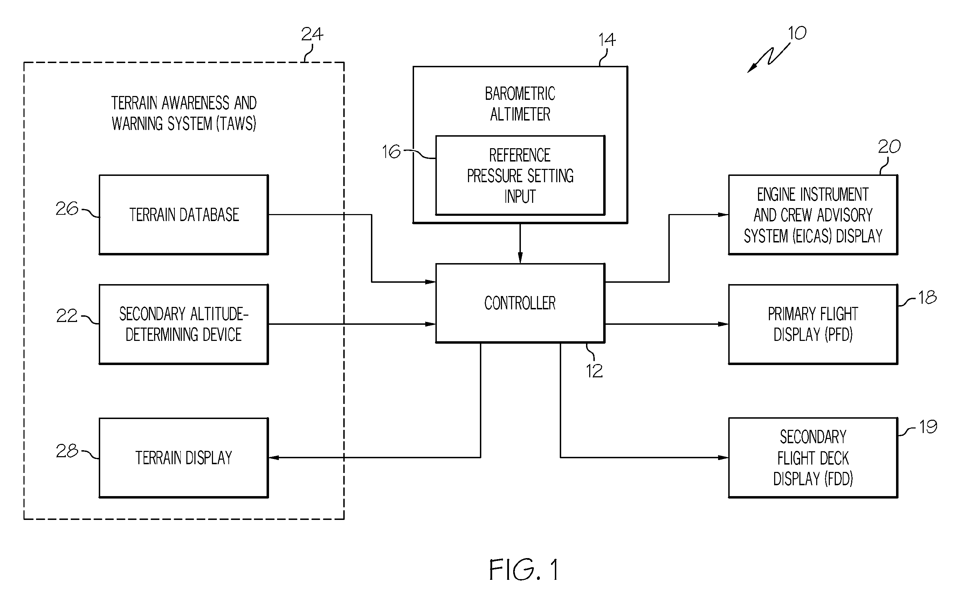

FIG. 1 is a block diagram of a primary flight display (PFD) system **10** that may be deployed on an aircraft in accordance with an exemplary embodiment. PFD system **10** includes a central controller **12**. Although shown as a single block for clarity, controller **12** may comprise, or be associated with, any suitable number of conventional electronic components including various combinations of microprocessors, air data computers, navigational equipment, memories, power supplies, storage devices, interface cards, and other standard components known in the art. Furthermore, controller **12** may include, or cooperate with, any number of software programs (e.g., avionics display programs) or instructions designed to carry out the various methods, process tasks, calculations, and display functions described herein.

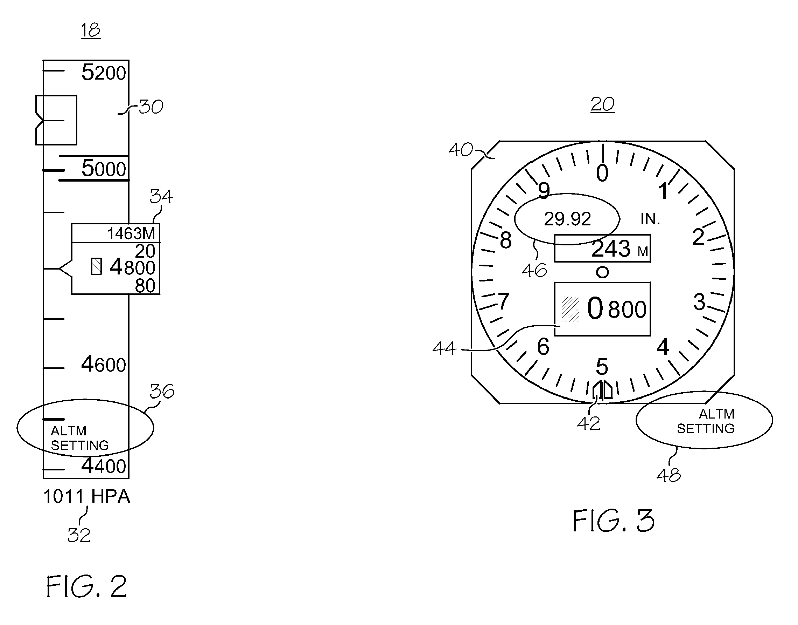

A barometric altimeter **14** is operatively coupled to a first input of controller **12.** Barometric altimeter **14** estimates the flight altitude of the aircraft on which PFD system **10** is deployed as a function of external air pressure calibrated to a reference pressure. To permit a pilot to adjust the reference pressure, barometric altimeter **14** is equipped with a reference pressure setting input **16**, which may assume the form of, for example, a rotatable knob. As explained previously, a pilot utilizes reference pressure setting input **16** to adjust the reference pressure setting at various intervals during flight (e.g., when the host aircraft ascends above or descends below the transition altitude). While barometric altimeter **14** is shown as a single block in FIG. 2, it will be appreciated that barometric altimeter **14** may include, or be associated with, various known components useful in determining aircraft altitude and other related flight parameters. For example, barometric altimeter **14** may include one or more velocity sensors (e.g., pilot tubes), static pressure sensors, and/or total air temperature sensors that cooperatively determine flight velocity, Mach number, and/or total air temperature. In addition, barometric altimeter **14** may include, or be associated with, one or more air data computers (not shown), such as the AZ-242 advanced ADC, available from Honeywell, Inc., of Redmond, Washington.

A Primary Flight Display (PFD) **18** is operatively coupled to a first output of controller **12**. PFD **18** may comprise any image-generating device suitable for deployment on aircraft (e.g., a cathode ray tube, a liquid crystal, an active matrix, or a plasma display device). During operation of PFD system **10,** controller **12** generates a graphical display on PFD **18** that visually indicates the status of various flight parameters, such as airspeed, heading, attitude, vertical speed, roll, altitude, and the like. PFD system **10** thus serves to increase the pilot's situational awareness by displaying a relatively large amount of information on a single composite display. Amongst the other graphical elements produced on PFD **18**, controller **12** generates an altitude graphic (e.g., a metered altitude tape graphic) that visually expresses the aircraft's flight altitude as estimated by barometric altimeter **14.** In addition, controller **12** generates a reference pressure setting graphic (e.g., a textual readout) on PFD **18** indicative of the current value of the reference pressure setting. Examples of the altitude graphic and the reference pressure setting graphic are discussed in more detail below in conjunction with FIG. **2**.

For the purposes of the present invention, PFD system **10** need employ only a single display device, namely, PFD **18**. However, in the illustrated exemplary embodiment, system **10** further includes a secondary flight deck display (FDD) **19,** which is operatively coupled to a second output of controller **12**. Secondary FDD **19** may comprise any display located in the aircraft's cockpit that has the ability to produce an altimeter graphic. Examples of secondary FDD **19** include a stand-alone primary altimeter display, stand-by altimeter display, a multi-function display (MFD), and the like. In accordance with an exemplary embodiment, a graphic altitude indicator is produced on FDD **19** that visually expressed the estimated altitude provided by barometric altimeter **14**. The graphic altitude indicator may assume the appearance of, for example, a digital altimeter gauge of the type described below in conjunction with FIG. 3.

Although by no means necessary, PFD system **10** may further include an Engine Instrument and Crew Advisory System (EICAS) display **20**. EICAS display **20** is operatively coupled to a third output of controller **12** and is associated with an aircraft's electronic flight information system (not shown). During flight, EICAS display **20** provides a centralized display area for the generation of various flight deck alerts, which may be produced in either a textual or graphical format. In contrast to PFD **18**, EICAS display **20** is commonly mounted at a location in the cockpit that is conveniently positioned for observation by the aircraft crew but that generally resides outside of the pilot's primary field-of-view.

In addition to the above-described components, PFD system **10** further includes a secondary altitude-determining device **22**. Secondary altitude-determining device **22** can comprise any device capable of providing controller **12** with a second, independent estimation of aircraft altitude. Secondary altitude-determining device **22** may comprise, for example, a radio or radar altimeter system that estimates aircraft altitude by monitoring the time period required for radio frequency (RF) energy pulses projected downward from the aircraft to reflect from the earth's surface and return to the aircraft. One example of a suitable radio altimeter system is the LRA-900 radio altimeter system available from Rockwell Collins, Inc., of Cedar Rapids, Iowa. As a second example, secondary altitude-determining device **22** may comprise a global positioning system (GPS) device that is capable of estimating aircraft altitude utilizing conventional satellite triangulation techniques. As a still further example, altitude-determining device **22** may comprise a wireless receiver configured to estimate aircraft altitude utilizing data provided from a remote (e.g., ground-based) source, such as an Air Traffic Control Center, a Terminal Radar Approach Control Facility, a Flight Service Station, or a control tower.

Secondary altitude-determining device **22** may be associated with a Terrain Awareness and Warning System (TAWS) of the type commonly deployed on aircraft. As will be appreciated by one skilled in the art, a conventional TAWS utilizes a radio altimeter system to estimate the proximity of an aircraft to the earth's surface. The TAWS produces navigational queues (e.g., "pull up") when the aircraft's position exceeds the parameters of a pre-selected flight mode. Recent versions of the TAWS further utilize a global positioning system (GPS) device in conjunction with an extensive global terrain database to provide more timely alerts of geographic obstacles that may reside within or near the aircraft's flight path. An example of such a TAWS is the Enhanced Ground Proximity Warning System (EGPWS) available from Honeywell, Inc., of Redmond, Washington.

In the illustrated exemplary embodiment, secondary altitude-determining device **22** is illustrated as being associated with a TAWS **24**, which includes a terrain database **26** and a terrain display **28**. Terrain display **28** is utilized, at least in part, to notify crew of location of nearby terrain, which may be graphically represented as low and high density green dots. By utilizing the altitude-determining device (e.g., the GPS device and/or the radio altimeter system) associated with TAWS **24** as secondary altitude-determining device **22**, redundancy in components is avoided and overall cost is reduced. This example notwithstanding, in alternative embodiments of PFD system **10**, secondary altitude-determining device **22** need not be associated with a Terrain Awareness and Warning System or, for that matter, any other aircraft subsystem.

As explained above, the reference pressure setting of barometric altimeter **14** should typically be adjusted at various times during flight (e.g., when the aircraft ascends above or descends below the transition altitude). PFD system **10** helps to ensure that an accurate reference pressure is maintained by altering the pilot, and other crew members, to potential reference pressure mis-sets. In particular, PFD system **10** produces a visual alert on PFD **18**, and perhaps on secondary FDD **19**, when an altimeter mis-set is detected. The visual alert may be produced in a graphical format and/or a textual format. In a basic embodiment, controller **12** identifies the occurrence of a reference pressure mis-set by determining if the difference between the estimated altitude provided by barometric altimeter **14** and that provided by secondary altitude-determining device **22** exceeds a predetermined error threshold, which may be static or may instead vary in relation to certain monitored flight parameters, instrumentation errors, and environmental conditions (e.g., weather). Of course, in more complex embodiments, controller **12** may also consider various other factors (e.g., variations in ambient temperature) in determining whether an altimeter mis-set has occurred. Regardless of the particular manner in which an altimeter mis-set is identified, controller **12** produces a visual alert on PFD **18**, and possibly on secondary FDD **19**, after the identification of an altimeter mis-set as described below in conjunction with FIGs. 2 and 3.

FIG. 2 is a plan view of an exemplary PFD altitude graphic **30** that may be generated on PFD **18** by controller **12** (FIG. 1). In this example, PFD altitude graphic **30** is depicted as a conventional metered altitude tape graphic. During flight, controller **12** alters the appearance of PFD altitude graphic **30** such that the metered altitude tape appears to scroll upward or downward as altitude decreases or increases, respectively, thus providing a coarse indication of the aircraft's current altitude as estimated by barometric altimeter **14** (FIG. 1). A more precise textual readout of the current aircraft altitude is also provided in a window 34, which overlays a central portion of the metered altitude tape graphic. Controller **12** further generates a reference pressure setting graphic on PFD **18**. As shown in FIG. 2, the reference pressure setting graphic may appear as a textual reference pressure readout **32**, which expresses the numerical value of the reference pressure setting in an appropriate unit type (e.g., in Hectopascals, in inches Hg, etc.).

After determining that an altimeter mis-set has occurred in the manner described above, controller **12** generates a visual alert on PFD **18**. This visual alert may assume any form suitable for alerting a pilot to the altimeter mis-set. For example, and as shown in FIG. 2 at **36**, the visual alert may appear as a text message, such as "BARO SETTING" or "ALTM SETTING," produced proximate PFD altitude graphic **30**. As an alternative or supplemental visual alert, controller **12** may also alter the appearance of reference pressure readout **32**. For example, controller **12** may change the coloration of reference pressure readout **32** (e.g., from green to amber), the font of reference pressure readout **32**, and/or the dimensions of reference pressure readout **32**. In another option, controller **12** may cause reference pressure readout **32** undergo a visual effect; e.g., controller **12** may cause readout **32** to flash. As a still further alternative, controller **12** may alter the appearance of the altitude indicator by, for example, changing the color of PFD altitude graphic **30** and/or window **34.** By producing a visual alert on PFD **18** proximate the altitude indicator, PFD system **10** provides a pilot with an intuitive altimeter mis-set alert that is conveniently located within the pilot's natural scan pattern.

PFD system **10** may also be configured generate an altimeter mis-set alert on display devices additional to PFD **18**. To further emphasize this point, FIG. 3 provides a plan view of an exemplary altimeter graphic, namely a digital altimeter gauge **40**, that may be generated on secondary flight deck display **19** by controller **12** (FIG. 1). During flight, the face of digital altimeter gauge **40** remains stationary relative to a rotating needle graphic **42** to provide a coarse indication of aircraft altitude as estimated by barometric altimeter **14** (FIG. 1). To provide a more precise indication of aircraft altitude, an altitude readout is provided within a central window **44** of digital altimeter gauge **40**. Controller **12** further generates a reference pressure setting readout **46** on altimeter gauge **40** indicative of the current reference pressure setting of barometric altimeter **14** (e.g., in Hectopascals, in inches Hg, etc.). Finally, when determining that an altimeter mis-set has occurred, controller **12** generates a visual altimeter mis-set alert on secondary FDD **19** proximate digital altimeter gauge **40**. As indicated in FIG. 3 at **48**, the altimeter mis-set alert may appear as a text message (e.g., "ALTM SETTING," "BARO SETTING," etc.). Alternatively, the altimeter mis-set alert may assume the form of a change in the appearance of digital altimeter gauge **40** and/or of textual readout **46**; e.g., controller **12** may alter the color, font, or size of textual readout **46**. By producing an altimeter mis-set alert on secondary FDD **19** in this manner, PFD system **10** provides notification to members of the crew that an altimeter mis-set has been detected. If desired, controller **12** may be also configured to produce additional visual (graphical or textual) altimeter mis-set alerts on still further displays, including, for example, EICAS display **20** shown in FIG. 1.

It should thus been appreciated that there has been provided at least one example of an primary flight display system suitable for detecting the occurrence of an altimeter mis-set and subsequently producing a visual alert indicative of the detected mis-set on the primary flight display and, perhaps, on a secondary flight deck display. By producing a visual alert on the PFD, in particular, the PFD system ensures that the altimeter mis-set alert is located within the pilot's natural scan pattern and thus promptly recognized. Of course, an audible alert may be generated in conjunction with the visual altimeter mis-set alert (e.g., an auditory message, such as "ALTIMETER SETTING," "ALTIMETER SETTING," or the like).

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A primary flight display system (10) for deployment on an aircraft including a barometric altimeter (14) and a secondary altitude-determining device (22), the barometric altimeter providing a first estimated altitude corresponding to a reference pressure setting, and the secondary altitude-determining device providing a second estimated altitude, the primary flight display system comprising:
a primary flight display (PFD) (18); and
a controller (12) coupled to the PFD and configured to generate: (i) an altitude graphic (30) on the PFD indicative of the first estimated altitude, and (ii) a visual alert (36) on the PFD when the difference between the first estimated altitude and the second estimated altitude exceeds a predetermined error threshold.

2. A primary flight display system (10) according to Claim 1 wherein the controller (12) is further configured to generate a textual readout (32) of the reference pressure setting on the PFD (18), and wherein the visual alert (36) comprises an alteration in the appearance of the textual readout of the reference pressure setting.

3. A primary flight display system (10) according to Claim 2 wherein the visual alert (36) comprises a change in the coloration of the textual readout (32) of the reference pressure setting.

4. A primary flight display system (10) according to Claim 2 wherein the visual alert (36) comprises a change in a dimension of the textual readout (32) of the reference pressure setting.

5. A primary flight display system (10) according to Claim 2 wherein the controller (12) is further configured to cause the textual readout (32) of the reference pressure setting to flash when the difference between the first estimated altitude and the second estimated altitude exceeds a predetermined error threshold.

6. A primary flight display system (10) according to Claim 1 wherein the altitude graphic (30) comprises a current altitude readout (34), and wherein the visual alert (36) comprises an alteration in the appearance of the current altitude readout.

7. A primary flight display system (10) according to Claim 1 wherein the altitude graphic (30) comprises a metered altitude tape graphic, and wherein the visual alert (36) comprises an alteration in the appearance of the metered altitude tape graphic.

8. A primary flight display system (10) according to Claim 1 wherein the visual alert (36) comprises a textual message.

9. A method for alerting a pilot of an aircraft to the mis-setting of a reference pressure setting associated with a barometric altimeter (14) deployed on the aircraft, the aircraft including a secondary altitude-determining device (22) and a primary flight display (PFD) (18), the method comprising:
providing a first estimated altitude utilizing the barometric altimeter device;
providing a second estimated altitude utilizing the secondary altitude-determining device;
comparing the first estimated altitude to the second estimated altitude; and
generating a visual alert (36) on the PFD when the difference between first estimated altitude and the second estimated altitude exceeds a predetermined error threshold.

10. A method according to Claim 9 wherein the aircraft further includes a secondary flight deck display (19), and wherein the method further comprises the step of producing an alert (48) on the secondary flight deck display when the difference between first estimated altitude and the second estimated altitude exceeds a predetermined error threshold.
